# EUROPÄISCHE PATENTSCHRIFT

(11) **EP 3 115 235 B1**
(45) Veröffentlichungstag und Bekanntmachung des Hinweises auf die Patenterteilung: **18.04.2018**
(21) Anmeldenummer: 16001426.2
(22) Anmeldetag: 24.06.2016
(51) Int. Cl.: B60G 7/02, B60G 7/00, F16B 43/00

(54) **VERFAHREN ZUR EINSTELLUNG EINER ACHSE EINES KRAFTFAHRZEUGS**
METHOD FOR ADJUSTING AN AXLE OF A MOTOR VEHICLE
PROCÉDÉ DE RÉGLAGE D'UN AXE D'UN VÉHICULE AUTOMOBILE

(30) Priorität: 04.07.2015 DE 102015008672
(43) Veröffentlichungstag der Anmeldung: 11.01.2017
(73) Patentinhaber: MAN Truck & Bus AG, 80995 München (DE)
(72) Erfinder: Hörmann, Robert, 85461 Bockhorn (DE); Püschel, Josef, 84144 Geisenhausen (DE)
(74) Vertreter: v. Bezold & Partner Patentanwälte - PartG mbB

(56) Entgegenhaltungen:
- DE-A1- 10 109 914
- GB-A- 2 343 495
- US-A- 1 332 626
- US-A- 1 492 561
- US-A- 2 772 596
- US-A- 5 074 578
- US-A- 5 388 057
- US-A- 5 645 294
- US-A1- 2002 054 810

## Beschreibung

Die Erfindung betrifft ein Verfahren zur Einstellung einer Achse eines Kraftfahrzeugs, insbesondere ein Verfahren zur Achseinstellung bei Anbindung eines Fahrwerks eines Kraftfahrzeugs an eine Kraftfahrzeugkarosserie und/oder an eine Fahrzeugrahmenstruktur, bei dem durch das Beilegen von einer oder mehreren Unterlegscheiben eine Achsneigung, ein Mittenversatz, eine Winkligkeit zur Fahrzeuglängsachse, ein Nachlauf und/oder ein Sturz einer Achse eingestellt wird.

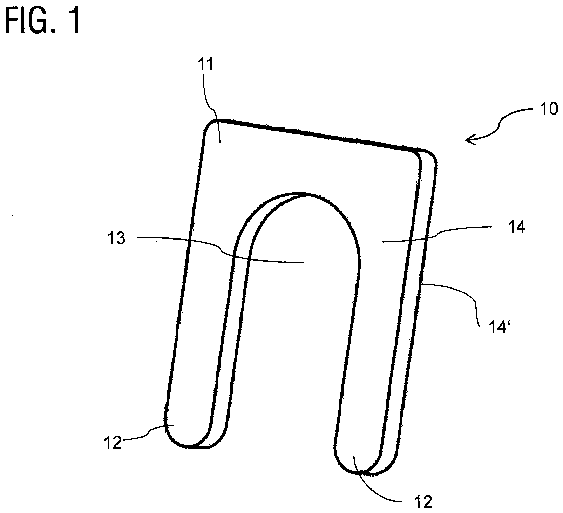

Üblicherweise werden die Fahrzeugachsen über Längs-, Dreieck- und Querlenker an der Fahrzeugkarosserie bzw. bei Nutzfahrzeugen an der Rahmenstruktur bzw. dem Gerippe angebunden. Die Achseinstellung, insbesondere die Einstellung der Achsneigung, des Mittenversatzes, der Winkligkeit zur Fahrzeuglängsachse, des Nachlaufs und/oder des Sturzes, erfolgt üblicherweise durch das Beilegen von unterschiedlich dicken Unterlegscheiben. Damit eine ringförmige Unterlegscheibe auf die Schraube zwischen der Lenkerpratze und der Anbindung an die Fahrzeugkarosserie bzw. an den Fahrzeugrahmen geschoben werden kann, muss die Lenkerverschraubung vollständig gelöst werden. Aus der Praxis ist ferner bekannt, zur Achseinstellung U-förmige Beilagen zu verwenden. In Figur 1 ist beispielhaft eine solche aus dem Stand der Technik bekannte Beilage 10 gezeigt. Die gezeigte Beilage 10 ist als U-förmiges flaches Bauteil ausgeführt, mit einem Mittelbereich 11, zwei an den Mittelbereich 11 angrenzenden Schenkeln 12 und einer dazwischen liegenden zentralen Ausnehmung 13 zur Aufnahme eines nicht gezeigten Schraubenschafts. Die Schenkel 12 und der Mittelbereich 11 bilden jeweils zwei parallele Auflagenflächen 14, 14' auf gegenüberliegenden Seiten der Beilage 10 aus. U-förmige Beilagen bieten einerseits den Vorteil, dass die Lenkerverschraubung zwar nicht vollständig gelöst werden muss, nachteilig ist jedoch die reduzierte Auflagefläche, die das Setzverhalten der Schraubverbindung ungünstig beeinflussen kann. Des Weiteren kann die Achseinstellung über längenverstellbare Längslenker erfolgen, die jedoch vergleichsweise hohe Kosten aufweisen.

Die US 5 388 057 A offenbart ein Verfahren zur Achseinstellung unter der Verwendung von einer oder mehrerer Unterlegschreiben. Aus der US 1 332 626 A ist eine Unterlegscheibe bekannt, die als geteilte Unterlegscheibe aus zwei Unterlegscheibenhälften gebildet wird, die in Anlage aneinander anordenbar sind. Entsprechendes ist auch aus der US 1 492 561 A und der DE 101 09 914 A1 bekannt.

Es ist somit eine Aufgabe der Erfindung, ein verbessertes Verfahren zur Achseinstellung bereitzustellen, mit dem Nachteile herkömmlicher Techniken vermieden werden können. Es ist insbesondere eine Aufgabe der Erfindung, ein verbessertes Verfahren zur Achseinstellung bereitzustellen, mit dem kostengünstig und in kurzer Zeit eine sichere und genaue Achseinstellung ermöglicht wird. Eine weitere Aufgabe ist es, eine Unterlegscheibe bereitzustellen, mittels derer ein verbessertes Verfahren zur Achseinstellung bereitgestellt werden kann.

Diese Aufgaben werden durch Verfahren und Vorrichtungen mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem ersten Gesichtspunkt der Erfindung wird ein Verfahren zur Einstellung einer Achse eines Kraftfahrzeugs bereitgestellt, bei dem durch das Beilegen von einer oder mehreren Unterlegscheiben eine Achsneigung, ein Mittenversatz, eine Winkligkeit zur Fahrzeuglängsachse, ein Nachlauf und/oder ein Sturz einer Achse eingestellt wird. Das Verfahren ist ein solches Verfahren zur Achseinstellung bei Anbindung eines Fahrwerks eines Kraftfahrzeugs an eine Kraftfahrzeugkarosserie und/oder an einen Fahrzeugrahmen. Der Begriff Fahrzeugrahmenstruktur soll auch ein Gerippe, das aus mehreren Trägern, wie z. B. Stahlrohren, Vierkantrohren etc. gebildet wird, umfassen.

Erfindungsgemäß ist mindestens eine der Unterlegscheiben, die zur Achseinstellung eingesetzt wird, als geteilte Unterlegscheibe ausgeführt. Eine geteilte Unterlegscheibe ist nicht einstückig ausgeführt, sondern ein aus mindestens zwei Teilen bestehender und zusammensetzbarer flacher Gegenstand, insbesondere ein flaches, ebenes Bauteil. Ein besonderer Vorzug der Erfindung liegt somit darin, dass die Achseinstellung ohne vollständiges Lösen der Schraubverbindung erfolgen kann, da ein Beilegen der Unterlegscheibe bzw. der Austausch einer Unterlegscheibe durch eine andere Unterlegscheibe mit unterschiedlicher Dicke und/oder Größe dadurch erfolgen kann, dass die Unterlegscheibenteile erst an der Schraubverbindung zusammengesetzt werden.

Die geteilte Unterlegscheibe kann als runder, z. B. ringförmiger Gegenstand ausgeführt sein. Die geteilte Unterlegscheibe kann aber auch als eckiges, plattenförmiges Bauteil ausgeführt sein. Vorzugsweise werden zur Achseinstellung geteilte Unterlegscheiben unterschiedlicher Größe und/oder Dicke bereitgestellt, so dass bei Bedarf eine Unterlegscheibe geeigneter Größe und/oder Dicke ausgewählt werden kann.

Gemäß einer weiteren bevorzugten Ausführungsform umfasst die geteilte Unterlegscheibe eine zentrale Öffnung, z. B. in Form einer entsprechenden Ausnehmung oder Bohrung, die zur Aufnahme eines Schraubschafts einer Achsverschraubung dient. Im Vergleich zu U-förmigen Beilagen bietet diese Form der geteilten Unterlegscheiben den Vorteil, dass die Schraubverbindung umfangsseitig vollständig mit einer Auflagefläche der Unterlegscheibe umgeben werden kann, um so ein günstiges Setzverhalten sicherzustellen.

Gemäß einer weiteren bevorzugten Ausführungsform ist die geteilte Unterlegscheibe zur einfachen Handhabbarkeit aus zwei Unterlegscheibenteilen gebildet, die in Anlage aneinander anordenbar und/oder angeordnet sind. Dies bedeutet, dass die zweistückig ausgeführte Unterlegscheibe aus den Unterlegscheibenteilen zu einem Gesamtbauteil zusammensetzbar ist.

Bei einer nicht erfindungsgemäßen Variante ist die geteilte Unterlegscheibe aus zwei Unterlegscheibenhälften, die vorzugsweise identisch bzw. baugleich ausgeführt sind, gebildet, beispielsweise aus zwei Ringscheibenhälften, was eine besonders gute Handhabbarkeit ermöglicht. Die Ringscheibenhälften sind in Anlage aneinander anordenbar und/oder angeordnet, so dass die zusammengesetzte Ringscheibe eine konzentrische Ausnehmung oder eine entsprechende Bohrung aufweist.

Eine weitere vorteilhafte Möglichkeit der erfindungsgemäßen Realisierung sieht vor, dass die geteilte Unterlegscheibe durch eine Steckverbindung der Unterlegscheibenteile zusammengehalten wird. Insbesondere können die einander zugewandten Enden der Unterlegscheibenteile jeweils eine Steckverbindung und/oder einen Formschluss ausbilden, die bzw. der die Unterlegscheibenteile gegen ein Verrutschen zueinander sichert, insbesondere gegen ein Verrutschen in eine zur Unterlegscheibenebene parallele Richtung. Dies bietet den besonderen Vorzug, dass die Unterlegscheibenteile zur Achseinstellung einen Schraubenschaft umgreifend zusammengesteckt werden können, ohne wieder auseinanderzufallen.

Die Unterlegscheibenebene ist die Plattenebene und somit parallel zu den beiden ebenen Auflagenflächen der geteilten Unterlegscheibe. Eine zur Unterlegscheibenebene parallele Richtung ist somit im an einer Schraubverbindung montierten Zustand der Unterlegscheibe senkrecht zur Längsachse des Schraubenschafts.

Bei einer besonders vorteilhaften Ausführungsvariante kann zur Ausbildung des Formschlusses eine Rastnase oder ein Steg eines Unterlegscheibenteils in eine korrespondierende Aussparung des anderen Unterlegscheibenteils eingreifen und einen Rand der Aussparung formschlüssig hintergreifen. Mit anderen Worten bilden die Rastnase oder der Steg eines Unterlegscheibenteils mit der korrespondierenden Aussparung des anderen Unterlegscheibenteils einen vollständigen Formschluss aus, der sich analog dem Anlegen von Puzzleteilen ergibt.

Hierbei kann die Rastnase oder der Steg kopfförmig, pilzförmig, trapezförmig oder T-förmig ausgeführt sein.

Erfindungsgemäß ist die geteilte Unterlegscheibe ein U-förmiges erstes Bauteil, welches einen Mittelbereich und zwei an den Mittelbereich angrenzende Schenkel aufweist, sowie ein zweites Bauteil, wobei das erste und das zweite Bauteil über eine Steckverbindung miteinander lösbar verbindbar sind, bei der das zweite Bauteil zwischen den Schenkeln des U-förmigen ersten Bauteils angeordnet wird. Diese geteilte Unterlegscheibe kann vorzugsweise zweiteilig ausgeführt sein, bestehend aus dem ersten und dem zweiten Bauteil. Die Steckverbindung kann als eine formschlüssige Verzahnung ausgeführt sein, wobei das zweite Bauteil eine Steckverbindung mit den Schenkeln des ersten Bauteils ausbildet.

Hierbei kann das zweite Bauteil in Anlage an den einander zugewandten Innenseiten der Schenkel angeordnet sein und/oder anordenbar sein. Eine vorteilhafte Variante sieht hierbei vor, dass die formschlüssige Steckverbindung als eine trapezförmige Verzahnung ausgeführt ist. Dies ermöglicht eine sichere lösbare Verbindung, die maschinell vorteilhaft herstellbar ist. Alternativ zu einer trapezförmigen Verzahnung kann die Steckverbindung bzw. die formschlüssige Verzahnung so ausgeführt sein, dass die Rastnase (oder der Steg oder der abragende Fortsatz) der Steckverbindung bzw. Verzahnung kopfförmig, pilzförmig, oder T-förmig ausgeführt ist.

Hierbei kann das U-förmige erste Bauteil an der Innenseite jedes Schenkels eine trapezförmige Ausnehmung aufweisen, und die an den Schenkeln anliegenden Seiten des zweiten Bauteils können einen dieser Ausnehmung angepassten bzw. formkorrespondierenden und in diese einrastbaren trapezförmigen Fortsatz aufweisen.

Alternativ kann das U-förmige erste Bauteil an der Innenseite jedes Schenkels einen trapezförmigen abragenden Fortsatz aufweisen, und die an den Schenkeln anliegenden Seiten des zweiten Bauteils können eine diesem Fortsatz angepasste Ausnehmung aufweisen, in die der Fortsatz einrastbar ist. Weiter alternativ können das U-förmige erste Bauteil und das zweite Bauteil jeweils sowohl eine trapezförmige Ausnehmung als auch einen trapezförmigen Fortsatz aufweisen.

Die schmalere Längsseite des Trapezes der trapezförmigen Ausnehmung ist vorzugsweise an der Öffnung der trapezförmigen Ausnehmung angeordnet. Auf diese Weise wird eine hinterschnittene Geometrie, insbesondere eine hinterschnittene Geometrie mit Riegelbildung, ausgebildet.

Bei dem Verfahren zur Achseinstellung können die Unterlegscheibenteile so um einen Schraubenschaft einer Schraubverbindung zur Anbindung einer Achse an eine Kraftfahrzeugkarosserie und/oder an eine Fahrzeugrahmenstruktur gelegt und zusammengesteckt werden, dass die Unterlegscheibenteile den ringförmigen Schraubenschaft umgreifen. Anschließend kann durch Anziehen der Schraubverbindung die zusammengesteckte Unterlegscheibe eingespannt werden, insbesondere zwischen einer Lenkerpratze oder einem Gummimetalllager eines Längs-, Dreiecks-, Vierpunkt- oder Querlenkers und einer Anbindung an der Fahrzeugkarosserie und/oder der Fahrzeugrahmenstruktur.

Gemäß einem weiteren Aspekt des Verfahrens kann die Achse eine Vorder-, Hinter-, Vorlauf- oder Nachlaufachse eines Nutzfahrzeugs sein.

Gemäß einem zweiten Gesichtspunkt der Erfindung wird eine Unterlegscheibe bereitgestellt. Zur Vermeidung von Wiederholungen sollen im Rahmen des Verfahrens offenbarte Merkmale der Unterlegscheibe auch als vorrichtungsgemäß offenbart gelten und beanspruchbar sein, d. h., die im Rahmen des Verfahrens beschriebenen Ausführungsformen der Unterlegscheibe sollen auch separat als Ausführungsformen einer Unterlegscheibe im Rahmen eines Vorrichtungsanspruchs offenbart und beanspruchbar sein.

Die erfindungsgemäße Unterlegscheibe ist somit als geteilte Unterlegscheibe ausgeführt, die gemäß einer der vorstehend beschriebenen Varianten ausgeführt ist.

Erfindungsgemäß umfasst die Unterlegscheibe eine zentrale Öffnung und ist aus zwei Unterlegscheibenteilen gebildet, die in Anlage aneinander anordenbar und/oder angeordnet sind und durch eine formschlüssige Steckverbindung der Unterlegscheibenteile zusammengehalten sind. Hierbei ist das erste Unterlegscheibenteil ein U-förmiges Bauteil, umfassend einen Mittelbereich und zwei an den Mittelbereich angrenzende Schenkel. Das zweite Unterlegscheibenteil ist zwischen den Schenkeln des U-förmigen ersten Bauteils angeordnet und/oder anordenbar und bildet mit den Schenkeln des ersten Bauteils eine Steckverbindung aus. Vorzugsweise ist die Steckverbindung als eine trapezförmige Verzahnung ausgeführt. Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht einer aus dem Stand der Technik bekannten U-förmigen Beilage;
- Figur 2: eine perspektivische Ansicht einer geteilten Unterlegscheibe gemäß einem Beispiel;

- Figur 3: eine Draufsicht der geteilten Unterlegscheibe aus Figur 2;
- Figur 4A und Figur 4B: die Verwendung einer geteilten Unterlegscheibe und einer herkömmlichen U-förmigen Beilage bei der Achseinstellung; und
- Figur 5: eine Draufsicht einer geteilten Unterlegscheibe gemäß einer Ausführungsform der Erfindung.

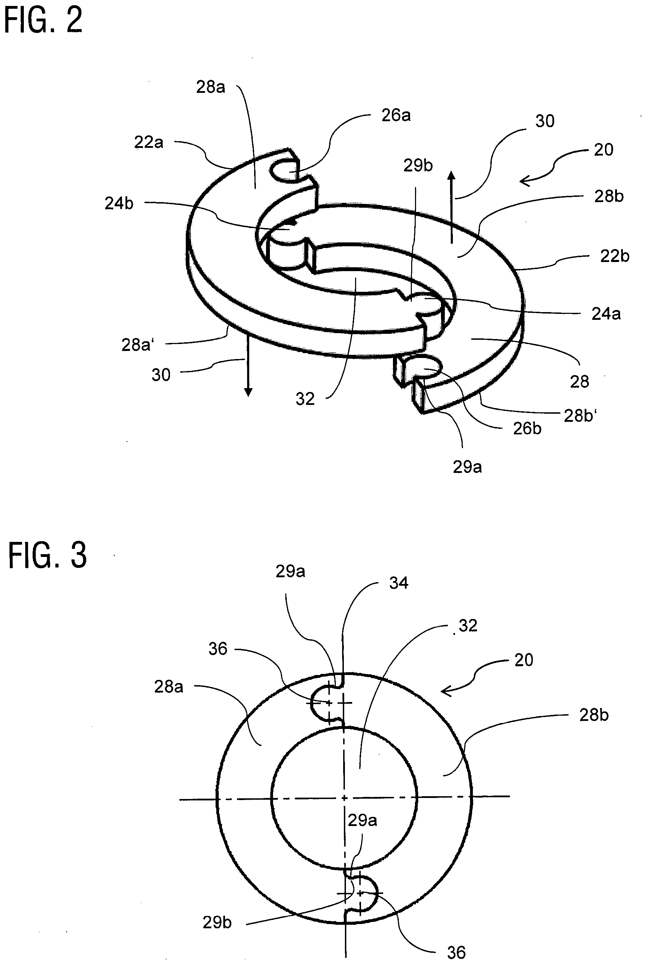

Figur 2 zeigt eine perspektivische Ansicht einer geteilten Unterlegscheibe 20 in entkoppelter Anordnung. In der gezeigten Ausführungsform ist die geteilte Unterlegscheibe als ringscheibenförmige Unterlegscheibe 20 ausgeführt, die in zwei identische Ringscheibenhälften 22a, 22b unterteilt ist. Jede der beiden Hälften 22a, 22b bildet in der gezeigten Darstellung je eine Rastnase 24a, 24b, sowie eine Aussparung 26a und 26b aus. In dem gezeigten Beispiel sind die Rastnasen 24a, 24b und die korrespondierenden Aussparungen 26a, 26b kopfförmig ausgebildet. Denkbar ist gleichermaßen eine pilzförmige oder T-förmige Ausgestaltung der Rastnasen 24a und 24b. Die Unterlegscheiben weisen jeweils zueinander parallele Oberflächen 28 auf, die als Auflagefläche und damit zur Leitung des Kraftflusses in der montierten Lenkerverschraubung dienen. Zur Unterscheidung sind die einzelnen Oberflächen mit den Bezugszeichen 28a, 28a' und 28b, 28b' bezeichnet. Die Rastnasen 24a, 24b und die formkorrespondierenden Aussparungen 26a, 26b bilden eine Steckverbindung aus, wobei zur Ausbildung der Steckverbindung bzw. eines Formschlusses die Rastnase der einen Unterlegscheibenhälfte 22a in die formkorrespondierende Aussparung jeweils der anderen Unterlegscheibenhälfte 22b gesteckt wird. Hierbei werden die beiden konzentrisch und gegenüberliegend ausgerichteten Unterlegscheibenhälften senkrecht zur Unterlegscheibenebene, d. h. in einer zu den Oberflächen 28 orthogonal verlaufenden Richtung 30, relativ zueinander verschoben, bis die Rastnasen 24a, 24b und Aussparungen 26a, 26b miteinander im Eingriff sind. Im zusammengesteckten Zustand bilden die beiden Ringscheibenhälften 22a, 22b eine Ringscheibe mit einer zentrale Öffnung 32 aus und die Oberflächenpaare 28a und 28b, sowie 28a' und 28b' liegen jeweils in einer Ebene.

Figur 3 zeigt die geteilte Unterlegscheibe 20 der Figur 2 in einer Draufsicht. Im zusammengesteckten Zustand der Unterlegschiebe 20, d. h. wenn die kopfförmige Rastnasen 24a, 24b im Eingriff mit den formkorrespondierenden Ausnehmungen 26a, 26b sind, bilden diese einen vollständigen Formschluss aus, bei dem ein äußerer Teilabschnitt 29a der Aussparung 26a bzw. 26b, d. h. derjenige Teilabschnitt der Aussparung, der der anderen Ringscheibenhälfte zugewandt ist, den Anfangsbereich 29b des kopfförmigen Steges hintergreift und dort eine Einschnürung ausbildet.

Die Einschnürung verhindert in einem zusammengebauten Zustand der Unterlegscheibe 20 ein selbstständiges Lösen der geteilten Unterlegscheibe 20 - ohne dass zusätzliche Sicherungselemente vonnöten sind. Gleichzeitig bedarf es für einen Montage oder Demontage einer geteilten Unterlegscheibe 20 lediglich ein axiales Spiel von etwa der Dicke der geteilten Unterlegscheibe 20.

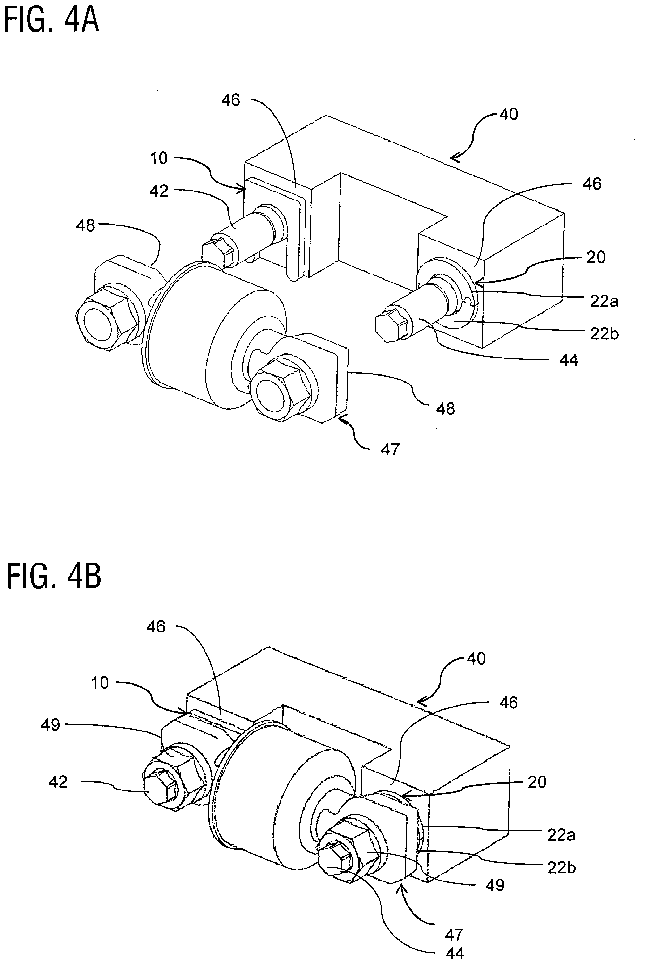

Die Figuren 4A und 4B illustrieren die Verwendung einer geteilten Unterlegscheibe 20 und einer herkömmlichen U-förmigen Beilage 10 bei der Achseinstellung. Hierbei ist mit dem Bezugszeichen 40 ein Teil des Fahrzeugrahmens oder Gerippe eines Nutzfahrzeugs stark schematisiert dargestellt, an dem eine Fahrzeugachse (nicht dargestellt) befestigt wird. Die Fahrzeugachse wird mit einem Lenker am Fahrzeugrahmen 40 befestigt, von dem in den Figuren 4A und 4B nur ein Gummimetalllager 47 gezeigt ist, der endseitig am Lenker befestigt ist.

In der gezeigten Form wird das Gummimetalllager 47 mittels zweier Schraubverbindungen umfassend die Schraubenschäfte 42 und 44 am Fahrzeugrahmen 40 oder Gerippe eines Nutzfahrzeugs befestigt, wobei zur Achseinstellung der Schraubenschaft 42 mit einer U-förmigen Beilage 10, und der Schraubenschaft 44 mit einer geteilten Unterlegscheibe 20 bestückt werden kann. Die unterschiedliche Bestückung dient lediglich zur Verdeutlichung der Unterschiede zwischen dem Stand der Technik und der vorliegenden Erfindung.

Die Unterlegscheibe 20 bzw. die U-förmige Beilage 10 liegen flächig an einer orthogonal zum Schraubenschaft 42, 44 orientierten Anschlagfläche 46 des Fahrzeugrahmens 40 an. Das Gummimetalllager 47 bildet im zusammengebauten Zustand mit der in Figur 4A freiliegenden Fläche der Unterlegscheibe 20 bzw. der U-förmigen Beilage 10 und einer planen Anlagefläche 48 des Gummimetalllagers ein Wirkflächenpaar aus.

Figur 4B verdeutlicht den Vorteil der geteilten Unterlegscheibe 20. Für eine Veränderung der Achsneigung mittels Hinzufügen oder Entfernen einer geteilten Unterlegscheibe 20 muss lediglich die Schraubenmutter 49 derart gelockert werden, dass ein geringfügiger axial ausgerichteter Spalt zwischen Gummimetalllager 47 und Fahrzeugrahmen 40 ermöglicht wird. Durch das entstehende axiale Spiel auf dem Schraubenschaft 42, 44 wird ein Verschiebung der geteilten Unterlegscheiben 22a, 22b zueinander in Richtung 30 ermöglicht, wodurch ein Lösen der Rastnase 24a, 24b aus dem Formschluss mit der Aussparung 26a, 26b erfolgen kann. Umgekehrt kann auch eine weitere geteilte Unterlegscheibe 20 nach dem gleichen Verfahren hinzugefügt werden.

Ein besonderer Vorzug liegt somit darin, dass die Achseinstellung im Gegensatz zur Verwendung einer nicht-geteilten Unterlegscheibe ohne vollständiges Lösen der Schraubverbindung erfolgen kann. Ein Beilegen einer zusätzlichen geteilten Unterlegscheibe 20 bzw. der Austausch einer geteilten Unterlegscheibe 20 durch eine andere Unterlegscheibe 20 mit unterschiedlicher Dicke und/oder Größe zur Anpassung von Achsneigung, Mittenversatz, Winkligkeit zur Fahrzeuglängsachse, Nachlauf und/oder Sturz der Achse kann bei Bedarf dadurch erfolgen kann, dass die Unterlegscheibenteile erst an der etwas gelösten Schraubverbindung zusammengesetzt werden. Im Vergleich zur einer herkömmlichen U-förmigen Beilage 10 ermöglicht die geteilte Unterlegscheibe 20 eine größere Auflagefläche.

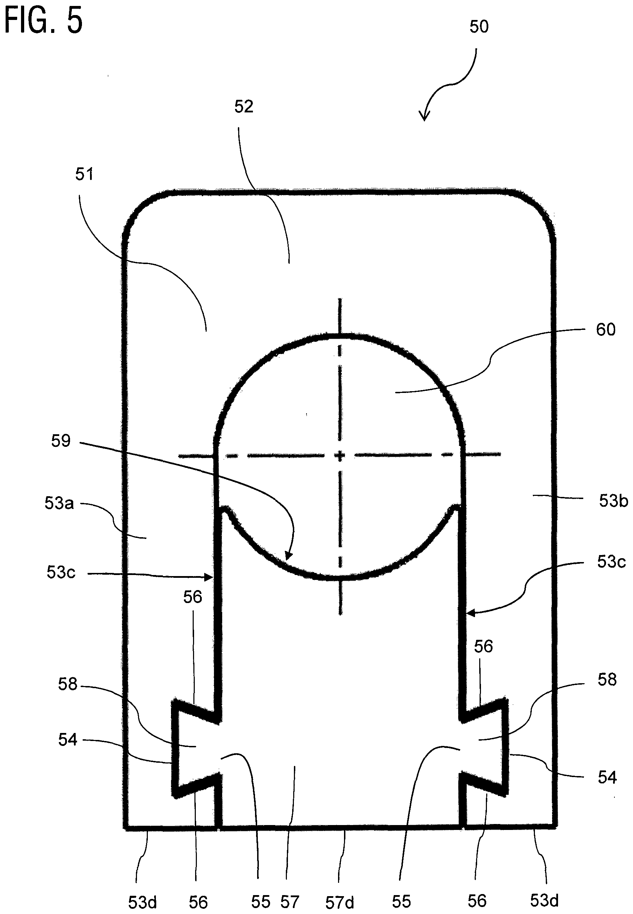

Figur 5 zeigt eine Draufsicht einer geteilten Unterlegscheibe gemäß einer Ausführungsform der Erfindung. Die Unterlegscheibe 50 ist zweiteilig ausgeführt, bestehend aus einem U-förmigen ersten Bauteil 51 und einem zweiten Bauteil 57. Das U-förmige erste Bauteil 51 weist einen Mittelbereich 52 und zwei an den Mittelbereich 52 angrenzende Schenkel 53a, 53b auf. Das erste und das zweite Bauteil 53a, 53b sind über eine Steckverbindung miteinander lösbar verbunden, bei der das zweite Bauteil 57 zwischen den Schenkeln 53a, 53b des U-förmigen ersten Bauteils 51 angeordnet ist.

Die Steckverbindung ist als formschlüssige trapezförmige Verzahnung ausgeführt. Hierbei weist das U-förmige erste Bauteil 51 sowohl an der Innenseite 53c des linken Schenkels 53a als auch an der Innenseite des rechten Schenkels 53b eine trapezförmige Ausnehmung 54 auf. Hierzu entsprechend weisen die an die beiden Schenkel 53a, 53b anliegenden Seiten des zweiten Bauteils 57 einen dieser Ausnehmung 54 angepassten und in diese einrastbaren senkrecht abragenden trapezförmigen Fortsatz 58 auf. Die schmalere Längsseite des Trapezes der trapezförmigen Ausnehmung 54 ist hierbei an der Öffnung 55 der trapezförmigen Ausnehmung angeordnet, wodurch eine hinterschnittene Geometrie mit Riegelbildung ausgebildet wird. Die geneigten Seitenkanten 56 der trapezförmigen Ausnehmung 54 konvergieren somit zur Öffnung 55 hin.

Figur 5 zeigt die Unterlegscheibe 50 bereits im zusammengesteckten Zustand. Die Breite des zweiten Bauteils 57, ohne Berücksichtigung der trapezförmigen Fortsätze, entspricht dem Abstand der Schenkel 53a, 53b, so dass das zweite Bauteil 57 im zusammengesteckten Zustand an den Innenseiten 53c der Schenkel 53a, 53b anliegt.

Im zusammengesteckten Zustand schließen die Kanten 53d an der Stirnseite der Schenkel 53a, 53b bündig mit der Unterkante 57d des zweiten Bauteils 57 ab. Die Länge des zweiten Bauteils 57 - in Richtung der Schenkel 53a, 53b gesehen - ist kürzer als die Länge der Schenkel 53a, 53b, so dass sich im zusammengesteckten Zustand eine zentrale Öffnung 60 zwischen Mittelbereich 51 und dem zweiten Bauteil 57 ausbildet. Die der zentralen Öffnung 60 zugewandte Seite des zweiten Bauteils bildet eine konkav gekrümmte Außenkante 59. Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 10: Beilage
- 11: Mittelbereich
- 12: Schenkel
- 13: Ausnehmung
- 14, 14': Parallele Auflageflächen
- 20: Unterlegscheibe
- 22a, 22b: Ringscheibenhälften
- 24a, 24b: Rastnase
- 26a, 26b: Aussparung
- 28, 28a, 28a', 28b, 28b': Auflageflächen
- 29a: Äußerer Teilabschnitt der Aussparung
- 29b: Anfangsbereich des Steges
- 30: Orthogonale Richtung
- 32: Zentrale Öffnung
- 40: Fahrzeugrahmen
- 42,44: Schraubenschaft
- 46: Anschlagfläche
- 47: Gummimetalllager
- 48: Oberfläche des Gummimetalllagers
- 49: Schraubenmutter
- 50: Unterlegscheibe
- 51: Erstes Bauteil
- 52: Mittelbereich
- 53a, 53b: Schenkel
- 53d: Kante
- 53c: Schenkelinnenseite
- 54: Trapezförmige Ausnehmung
- 55: Öffnungsbereich
- 56: Geneigte Seitenkante
- 57: zweites Bauteil
- 57d: Unterkante zweites Bauteils
- 58: Trapezförmiger Fortsatz
- 59: Gekrümmte Außenkante
- 60: Ausnehmung

## Patentansprüche

1. Verfahren zur Achseinstellung bei Anbindung eines Fahrwerks eines Kraftfahrzeugs an eine Kraftfahrzeugkarosserie und/oder an eine Fahrzeugrahmenstruktur, bei dem durch das Beilegen von einer oder mehreren Unterlegscheiben eine Achsneigung, ein Mittenversatz, eine Winkligkeit zur Fahrzeuglängsachse, ein Nachlauf und/oder ein Sturz einer Achse eingestellt wird, **dadurch gekennzeichnet,**
**dass** mindestens eine der Unterlegscheiben, die zur Achseinstellung eingesetzt wird, als geteilte Unterlegscheibe (20; 50) ausgeführt ist; und
**dass** die geteilte Unterlegscheibe (50) ein U-förmiges erstes Bauteil (51), umfassend einen Mittelbereich (52) und zwei an den Mittelbereich angrenzende Schenkel (53a, 53b), und ein zweites Bauteil (57) aufweist, wobei das erste und das zweite Bauteil über eine Steckverbindung miteinander lösbar verbindbar sind, bei der das zweite Bauteil (57) zwischen den Schenkeln (53a, 53b) des U-förmigen ersten Bauteils (51) angeordnet wird.

2. Verfahren nach Anspruch 1, **dadurch gekennzeichnet, dass** die geteilte Unterlegscheibe (50) eine zentrale Öffnung (60) umfasst und aus zwei Unterlegscheibenteilen (52, 57) gebildet wird, die in Anlage aneinander anordenbar und/oder angeordnet sind.

3. Verfahren nach Anspruch 2, **dadurch gekennzeichnet,**
(a) **dass** die geteilte Unterlegscheibe (50) durch eine Steckverbindung der Unterlegscheibenteile (52, 57) zusammengehalten wird; und/oder
(b) **dass** die einander zugewandten Enden der Unterlegscheibenteile (52, 57) jeweils eine Steckverbindung und/oder einen Formschluss ausbilden, die bzw. der die Unterlegscheibenteile gegen ein Verrutschen zueinander sichert, insbesondere gegen ein Verrutschen in eine zur Unterlegscheibenebene parallele Richtung.

4. Verfahren nach Anspruch 3, **dadurch gekennzeichnet, dass** zur Ausbildung des Formschlusses eine Rastnase (58) oder ein Steg eines Unterlegscheibenteils in eine korrespondierende Aussparung (54) des anderen Unterlegscheibenteils eingreift und einen Rand der Aussparung (54) formschlüssig hintergreift.

5. Verfahren nach Anspruch 4, **dadurch gekennzeichnet, dass** die Rastnase (54) oder der Steg kopfförmig, pilzförmig, trapezförmig oder T-förmig ausgeführt ist.

6. Verfahren nach einem der vorhergehenden Ansprüche, **dadurch gekennzeichnet, dass** das zweite Bauteil (57) in Anlage an den einander zugewandten Innenseiten (53c) der Schenkel (53a, 53b) angeordnet und/oder anordenbar ist.

7. Verfahren nach einem der vorhergehenden Ansprüche, **dadurch gekennzeichnet, dass** die Steckverbindung als eine trapezförmige Verzahnung (54, 58) ausgeführt ist.

8. Verfahren nach Anspruch 7, **dadurch gekennzeichnet, dass** zur Ausbildung der trapezförmigen Verzahnung
(a) das U-förmige erste Bauteil (51) an der Innenseite (53c) jedes Schenkels (53a, 53b) eine trapezförmige Ausnehmung (54) aufweist und die an den Schenkeln (53a, 53b) anliegenden Seiten des zweiten Bauteils (57) einen dieser Ausnehmung (54) angepassten und in diese einrastbaren trapezförmigen Fortsatz (58) aufweisen; oder
(b) das U-förmige erste Bauteil an der Innenseite jedes Schenkels einen trapezförmigen abragenden Fortsatz aufweist und die an den Schenkeln anliegenden Seiten des zweiten Bauteils eine diesem Fortsatz angepasste Ausnehmung aufweist, in die der Fortsatz einrastbar ist.

9. Verfahren nach Anspruch 8, **dadurch gekennzeichnet, dass** die schmalere Längsseite des Trapezes der trapezförmigen Ausnehmung (54) an der Öffnung (55) der trapezförmigen Ausnehmung angeordnet ist, zur Ausbildung einer hinterschnittenen Geometrie.

10. Verfahren nach einem der vorhergehenden Ansprüche, **dadurch gekennzeichnet, dass** zur Achseinstellung die Unterlegscheibenteile um einen Schraubenschaft (42, 44) einer Schraubverbindung zur Anbindung einer Achse an eine Kraftfahrzeugkarosserie und/oder eine Fahrzeugrahmenstruktur gelegt und zusammengesteckt werden und dass anschließend durch Anziehen der Schraubverbindung die zusammengesteckte Unterlegscheibe eingespannt wird, insbesondere zwischen einer Lenkerpratze oder einem Gummimetalllager (50) eines Längs-, Dreiecks-, Vierpunkt- oder Querlenkers und einer Anbindung an der Fahrzeugkarosserie und/oder der Fahrzeugrahmenstruktur.

11. Verfahren nach einem der vorhergehenden Ansprüche, **dadurch gekennzeichnet, dass** die Achse eine Vorder-, Hinter-, Vorlauf- oder Nachlaufachse eines Nutzfahrzeugs ist.

12. Unterlegscheibe (50) zur Verwendung bei der Achseinstellung bei Anbindung eines Fahrwerks eines Kraftfahrzeugs an eine Kraftfahrzeugkarosserie und/oder an eine Fahrzeugrahmenstruktur, bei der durch das Beilegen von einer oder mehreren Unterlegscheiben eine Achsneigung, ein Mittenversatz, eine Winkligkeit zur Fahrzeuglängsachse, ein Nachlauf und/oder ein Sturz einer Achse eingestellt werden, wobei die Unterlegscheibe
(a) eine zentrale Öffnung (60) umfasst,
(b) zwei Unterlegscheibenteile (51, 57) aufweist, die in Anlage aneinander anordenbar und/oder angeordnet sind und durch eine formschlüssige Steckverbindung der Unterlegscheibenteile zusammengehalten sind,
(c) wobei das erste Unterlegscheibenteil (51) ein U-förmiges Bauteil ist, umfassend einen Mittelbereich (52) und zwei an den Mittelbereich (52) angrenzende Schenkel (53a, 53b), und wobei das zweite Unterlegscheibenteil (57) zwischen den Schenkeln (53a, 53b) des U-förmigen ersten Bauteils (51) angeordnet und/oder anordenbar ist und mit den Schenkeln (53a, 53b) des ersten Bauteils eine Steckverbindung ausbildet.

13. Unterlegscheibe nach Anspruch 12, **dadurch gekennzeichnet, dass** die Steckverbindung als eine trapezförmige Verzahnung (54, 58) ausgeführt ist.

## Claims

1. Method for axle setting in the case of attachment of a chassis of a motor vehicle to a motor vehicle body and/or to a vehicle frame structure, in which method an axle tilt, a centre offset, an angularity with respect to the vehicle longitudinal axis, a caster and/or a camber of an axle are/is set by way of the attachment of one or more shims, **characterized in that** at least one of the shims which is used for axle setting is configured as a split shim (20; 50); and **in that** the split shim (50) has a U-shaped first component (51), comprising a centre region (52) and two limbs (53a, 53b) which adjoin the centre region, and a second component (57), it being possible for the first and the second component to be connected releasably to one another via a push-in connection, in which the second component (57) is arranged between the limbs (53a, 53b) of the U-shaped first component (51).

2. Method according to Claim 1, **characterized in that** the split shim (50) comprises a central opening (60) and is formed from two shim parts (52, 57) which can be arranged and/or are arranged in contact with one another.

3. Method according to Claim 2, **characterized**
(a) **in that** the split shim (50) is held together by way of a push-in connection of the shim parts (52, 57); and/or
(b) **in that** those ends of the shim parts (52, 57) which face one another in each case form a push-in connection and/or a positively locking connection which secure/secures the shim parts against slipping with respect to one another, in particular against slipping in a direction which is parallel to the shim plane.

4. Method according to Claim 3, **characterized in that**, in order to configure the positively locking connection, a latching lug (58) or a web of one shim part engages into a corresponding cut-out (54) of the other shim part and engages behind an edge of the cut-out (54) in a positively locking manner.

5. Method according to Claim 4, **characterized in that** the latching lug (54) or the web is of head-shaped, mushroom-shaped, trapezoidal or T-shaped configuration.

6. Method according to one of the preceding claims, **characterized in that** the second component (57) is arranged and/or can be arranged in contact with those inner sides (53c) of the limbs (53a, 53b) which face one another.

7. Method according to one of the preceding claims, **characterized in that** the push-in connection is configured as a trapezoidal tooth profile (54, 58).

8. Method according to Claim 7, **characterized in that**, in order to configure the trapezoidal tooth profile,
(a) the U-shaped first component (51) has a trapezoidal recess (54) on the inner side (53c) of each limb (53a, 53b), and those sides of the second component (57) which bear against the limbs (53a, 53b) have a trapezoidal projection (58) which is adapted to the said recess (54) and can be latched into the latter; or
(b) the U-shaped first component has a trapezoidal protruding projection on the inner side of each limb, and those sides of the second component which bear against the limbs have a recess which is adapted to the said projection and into which the projection can be latched.

9. Method according to Claim 8, **characterized in that** the narrower longitudinal side of the trapezium of the trapezoidal recess (54) is arranged at the opening (55) of the trapezoidal recess, in order to configure an undercut geometry.

10. Method according to one of the preceding claims, **characterized in that**, for axle setting, the shim parts are laid around a screw shank (42, 44) of a screw connection for attaching an axle to a motor vehicle body and/or a vehicle frame structure and are plugged together, and **in that** the shim which has been plugged together is subsequently tensioned by way of tightening of the screw connection, in particular between a link support bracket or a rubber/metal bearing (50) of a longitudinal, triangular, four-point or transverse link and an attachment on the vehicle body and/or the vehicle frame structure.

11. Method according to one of the preceding claims, **characterized in that** the axle is a front, rear, leading or trailing axle of a commercial vehicle.

12. Shim (50) for use in the axle setting in the case of attachment of a chassis of a motor vehicle to a motor vehicle body and/or to a vehicle frame structure, in which shim (50) an axle tilt, a centre offset, an angularity with respect to the vehicle longitudinal axis, a caster and/or a camber of an axle are/is set by way of the attachment of one or more shims, the shim
(a) comprising a central opening (60),
(b) having two shim parts (51, 57) which can be arranged and/or are arranged in contact with one another and are held together by way of a positively locking push-in connection of the shim parts,
(c) the first shim part (51) being a U-shaped component, comprising a centre region (52) and two limbs (53a, 53b) which adjoin the centre region (52), and the second shim part (57) being arranged and/or being capable of being arranged between the limbs (53a, 53b) of the U-shaped first component (51) and configuring a push-in connection with the limbs (53a, 53b) of the first component.

13. Shim according to Claim 12, **characterized in that** the push-in connection is configured as a trapezoidal tooth profile (54, 58).

## Revendications

1. Procédé de réglage d'un essieu lors de l'assemblage d'un train de roulement d'un véhicule automobile à une carrosserie de véhicule automobile et/ou à une structure de châssis de véhicule, dans lequel on règle par la pose d'une ou de plusieurs rondelles une inclinaison de l'essieu, un décalage du milieu, une perpendicularité par rapport à l'axe longitudinal du véhicule, une chasse et/ou un carrossage d'un essieu, **caractérisé en ce que** au moins une rondelle, qui est utilisée pour le réglage de l'essieu, est réalisée sous forme de rondelle divisée (20; 50); et
la rondelle divisée (50) présente un première partie en forme de U (51), comprenant une région médiane (52) et deux branches (53a, 53b) adjacentes à la région médiane (52), et une deuxième partie (57), dans lequel la première et la deuxième parties peuvent être assemblées l'une à l'autre de façon séparable par un assemblage emboîté, dans lequel la deuxième partie (57) est disposée entre les deux branches (53a, 53b) de la première partie en forme de U (51).

2. Procédé selon la revendication 1, **caractérisé en ce que** la rondelle divisée (50) comprend une ouverture centrale (60) et est formée de deux parties de rondelle (52, 57), qui peuvent être et/ou qui sont disposées en appui l'une sur l'autre.

3. Procédé selon la revendication 2, **caractérisé en ce que**
(a) la rondelle divisée (50) est solidarisée par un assemblage emboîté des parties de rondelle (52, 57); et/ou
(b) les extrémités tournées l'une vers l'autre des parties de rondelle (52, 57) forment respectivement un assemblage emboîté et/ou un emboîtement, qui bloque les parties de rondelle contre un glissement l'une par rapport à l'autre, en particulier contre un glissement dans une direction parallèle au plan de la rondelle.

4. Procédé selon la revendication 3, **caractérisé en ce que** pour la formation de l'emboîtement un nez d'encliquetage (58) ou une nervure d'une partie de rondelle s'engage dans une découpe correspondante (54) de l'autre partie de rondelle et s'accroche par emboîtement à un bord de la découpe (54).

5. Procédé selon la revendication 4, **caractérisé en ce que** le nez d'encliquetage (54) ou la nervure est réalisé(e) en forme de tête, en forme de champignon, en forme de trapèze ou en forme de T.

6. Procédé selon l'une quelconque des revendications précédentes, **caractérisé en ce que** la deuxième partie (57) est et/ou peut être disposée en appui sur les côtés intérieurs tournés l'un vers l'autre (53c) des branches (53a, 53b).

7. Procédé selon l'une quelconque des revendications précédentes, **caractérisé en ce que** l'assemblage par emboîtement est réalisé sous la forme d'une denture trapézoïdale (54, 58).

8. Procédé selon la revendication 7, **caractérisé en ce que** pour la formation de la denture trapézoïdale
(a) la première partie en forme de U (51) présente sur le côté intérieur (53c) de chaque branche (53a, 53b) un évidement trapézoïdal (54) et les côtés de la deuxième partie (57) appliqués sur les branches (53a, 53b) présentent un prolongement trapézoïdal (58) adapté à cet évidement (54) et pouvant être encliqueté dans celui-ci; ou
(b) la première partie en forme de U présente sur le côté intérieur de chaque branche un prolongement trapézoïdal en saillie et les côtés de la deuxième partie appliqués sur les branches présentent un évidement adapté à ce prolongement, dans lequel le prolongement peut être encliqueté.

9. Procédé selon la revendication 8, **caractérisé en ce que** le long côté plus étroit du trapèze de l'évidement trapézoïdal (54) est disposé à l'ouverture (55) de l'évidement trapézoïdal, pour la formation d'une géométrie en contre-dépouille.

10. Procédé selon l'une quelconque des revendications précédentes, **caractérisé en ce que** pour le réglage de l'essieu les parties de rondelle sont placées et réunies autour d'une tige de vis (42, 44) d'un assemblage vissé pour l'assemblage d'un essieu à une carrosserie de véhicule automobile et/ou à une structure de châssis de véhicule et **en ce que** la rondelle réunie est ensuite coincée par serrage de l'assemblage vissé, en particulier entre une griffe de bielle ou un appui en métal-caoutchouc (50) d'une bielle longitudinale, triangulaire, à quatre points ou transversale et une liaison à la carrosserie de véhicule et/ou à la structure de châssis de véhicule.

11. Procédé selon l'une quelconque des revendications précédentes, **caractérisé en ce que** l'essieu est un essieu avant, un essieu arrière, un essieu porteur poussé ou un essieu porteur traîné d'un véhicule utilitaire.

12. Rondelle (50) à utiliser lors du réglage d'un essieu lors de l'assemblage d'un train de roulement d'un véhicule automobile à une carrosserie de véhicule automobile et/ou à une structure de châssis de véhicule, dans laquelle une inclinaison de l'essieu, un décalage du milieu, une perpendicularité par rapport à l'axe longitudinal du véhicule, une chasse et/ou un carrossage d'un essieu sont réglés par la pose d'une ou de plusieurs rondelles, dans laquelle la rondelle
(a) comprend une ouverture centrale (60),
(b) présente deux parties de rondelle (51, 57), qui peuvent être et/ou sont disposées en appui l'une sur l'autre et sont solidarisées par un assemblage engagé par emboîtement des parties de rondelle,
(c) dans laquelle la première partie de rondelle (51) est une partie en forme de U, comprenant une région médiane (52) et deux branches (53a, 53b) adjacentes à la région médiane (52), et dans laquelle la deuxième partie de rondelle (57) est et/ou peut être disposée entre les branches (53a, 53b) de la première partie en forme de U (51) et forme un assemblage emboîté avec les branches (53a, 53b) de la première partie.

13. Rondelle selon la revendication 12, **caractérisée en ce que** l'assemblage emboîté est réalisé sous la forme d'une denture trapézoïdale (54, 58).
